# EUROPEAN PATENT APPLICATION

(11) **EP 4 020 856 A1**
(43) Date of publication of application: **29.06.2022**
(21) Application number: 20870139.1
(22) Date of filing: 07.08.2020
(51) Int. Cl.: H04J 11/00

(54) **CELL SEARCH METHOD AND APPARATUS, USER EQUIPMENT, AND STORAGE MEDIUM**

(30) Priority: 29.09.2019 CN 201910932219
(71) Applicant: ZTE Corporation, Shenzhen, Guangdong 518057 (CN)
(72) Inventor: BIAN, Zhiyao, Shenzhen, Guangdong 518057 (CN)
(74) Representative: Raynor, Simon Mark
(86) International application number: PCT/CN2020/107897
(87) International publication number: WO 2021/057285

(57) **Abstract**

Embodiments of the present disclosure relate to the field of communication, and disclose a cell search method and apparatus, a user equipment and a storage medium. In the method, data are intercepted from downlink data according to a pre-acquired start address and data length of a synchronization signal block, SSB, where the start address and the data length are pre-acquired according to a broadcast channel transmission protocol based on which the downlink data are transmitted; and the intercepted data are analyzed to acquire cell information.

## Description

### CROSS REFERENCE TO RELATED APPLICATION

The present disclosure claims priority to Chinese Patent Application No. 201910932219.8, filed on September 29, 2019, which is incorporated herein by reference in its entirety.

### TECHNICAL FIELD

Embodiments of the present disclosure relate to the field of communication, in particular to a cell search method and apparatus, a user equipment and a storage medium.

### BACKGROUND

Cell search is used for guaranteeing that a user equipment (hereinafter UE) acquires time and frequency synchronization with a system, so as to read system information (such as cell IDs, system bandwidths, other cell broadcast information, etc.) and carry out subsequent data transmission. That is, to access a certain cell, the UE needs to complete cell search, cell system information acquisition, random access and other procedures, among which the cell search is one of the important prerequisites of the subsequent procedures. In application of mobile communication systems, the UE needs to search for a suitable cell as soon as possible after being powered on, so as to acquire details of the cell. The UE can use network services only after logging in a cell.

### SUMMARY

Embodiments of the present disclosure are to provide a cell search method and apparatus, a user equipment and a storage medium.

Some embodiments of the present disclosure provide a cell search method. The method includes: intercepting data from downlink data according to a pre-acquired start address and data length of a synchronization signal block (hereinafter SSB), where the start address and the data length are pre-acquired according to a broadcast channel transmission protocol based on which the downlink data are transmitted, and analyzing the intercepted data to acquire cell information.

Some embodiments of the present disclosure provide a cell search apparatus. The apparatus includes a data acquisition module configured to intercept data from downlink data, transmitted on the basis of a broadcast channel transmission protocol, according to a pre-acquired start address and data length of a SSB. The apparatus includes an analysis module configured to analyze the intercepted data to acquire cell information, and a parameter acquisition module configured to pre-acquire the start address and the data length of the SSB according to the broadcast channel transmission protocol based on which the downlink data are transmitted.

Some embodiments of the present disclosure provide a user equipment. The user equipment includes at least one processor and a memory in communication connection with the at least one processor. The memory is configured to store an instruction executable by the at least one processor. The instruction, when executed by the at least one processor, causes the at least one processor to carry out the cell search method described above.

Some embodiments of the present disclosure provide a computer-readable storage medium storing a computer program. The computer program, when executed by a processor, implements the cell search method described above.

### BRIEF DESCRIPTION OF THE DRAWINGS

One or more embodiments are exemplarily described by figures in accompanying drawings, and such exemplary description does not constitute a limitation on the embodiments. Elements with the same reference numerals in the accompanying drawings are shown as similar elements, and the drawings in the accompanying drawings do not constitute a scale limitation unless otherwise stated.
FIG. 1 is a flowchart of a cell search method according to a first embodiment of the present disclosure;
FIG. 2 is another flowchart of the cell search method according to the first embodiment of the present disclosure;
FIG. 3 is a flowchart of a cell search method according to a second embodiment of the present disclosure;
FIG. 4 is a flowchart of a cell search method according to a third embodiment of the present disclosure;
FIG. 5 is a structural diagram of a cell search apparatus according to a fourth embodiment of the present disclosure; and
FIG. 6 is a structural diagram of user equipment according to a fifth embodiment of the present disclosure.

### DETAILED DESCRIPTION OF THE EMBODIMENTS

In order to make objectives, technical concepts and advantages of embodiments of the present disclosure more clear, embodiments of the present disclosure will be described in detail below with reference to accompanying drawings. However, those of ordinary skill in the art may understand that in each embodiment of the present disclosure, many technical details have been put forward in order to make readers better understand the present disclosure. However, even without these technical details and various changes and modifications based on the embodiments below, technical concepts to be protected claimed by the present disclosure may be basically implemented. The following embodiments are divided for the convenience of description, and should not constitute any limitation on the specific implementation of the present disclosure. Each embodiment can be combined with and referenced to each other on the premise of no contradiction.

At present, a user equipment uses a primary synchronization signal (hereinafter PSS) and a secondary synchronization signal (hereinafter SSS) to complete a downlink synchronization procedure, and downlink synchronization refers to synchronizing of the user equipment with a signal of a sender of downlink data.

The inventor finds that a PSS is directly mapped to a time domain at the sender, and a user equipment needs to try to analyze all possible time domain positions of the PSS and all possible frequency domain positions of the SSS so as to complete cell search. With rapid development of communication technology, more and more time domain positions of the PSS and more and more frequency domain positions of the SSS may appear according to a protocol. For example, in the 5th generation new radio (called as 5G NR), there are at most 64 possible time domain positions of the PSS according to the protocol, and the frequency domain position of the SSS is no longer fixed in whole broadband. In addition, a synchronization signal block (SSB, also called as SS/PBCH block) is composed of the PSS, the SSS and a physical broadcast channel (hereinafter PBCH) signal, and a transmission period of the SSB may be selected from 5 ms, 10 ms, 20 ms, 40 ms, 80 ms, 160 ms, etc. Therefore, many scenes may be produced by combining different periods with the time and frequency domain positions, which makes the user equipment need to process data with a data length of more than 4 million Ts (1 Ts = 1/(15,000^{∗}2048)s) to complete cell search procedure according to the protocol, which requires too long time. To this end, the inventor proposes a technical concept of the present disclosure.

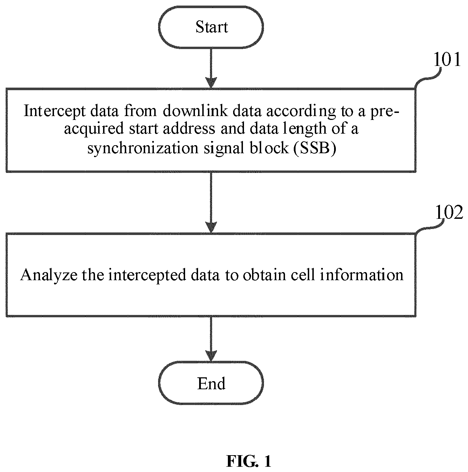

A first embodiment of the present disclosure relates to a cell search method. A specific flow is shown in FIG. 1.

In an operation 101, data are intercepted from downlink data according to a pre-acquired start address and data length of a SSB.

The start address and the data length are pre-acquired according to a broadcast channel transmission protocol based on which the downlink data are transmitted.

In an operation 102, the intercepted data are analyzed to acquire cell information.

The cell search method in an embodiment may be applied to a user equipment. The user equipment is an electronic device that may be connected to a network, such as a mobile phone. In an embodiment, the broadcast channel transmission protocol based on which the downlink data are transmitted may be the 5th Generation New Radio (5G NR for short) protocol. This embodiment and the following embodiments will take the 5G NR protocol as an example, but not limited thereto.

In the operation 101, the downlink data are sent to the user equipment from the sender of the downlink data. The sender of the downlink data may be a base station, etc. A start address of a SSB (hereinafter SSBStart) indicates a start position of the SSB in each downlink data frame, and the user equipment may intercept data from a downlink data frame, which includes a frequency domain position where the SSB may exist. That is, for downlink data frames with different frequency domain positions, data with a data length of SSBLength is intercepted from the start address SSBStart each time. Therefore, the user equipment may intercept data containing SSB in different frequency domain positions.

The start address may be pre-stored in a local record and directly called during cell search procedure. When the user equipment contains the Global Positioning System (GPS), a synchronization time difference between the user equipment, to which the cell search method is applied, and the sender of the downlink data is zero. In view of this, the start address needs to be computed only based on time domain positions, separately determined on the basis of the broadcast channel transmission protocol, of the SSB and cell coverage range. In this case, the start address is unchanged, thus the start address can be pre-stored in the local record.

In an embodiment, the start address and the data length are pre-acquired according to the broadcast channel transmission protocol based on which the downlink data are transmitted. In an embodiment, the broadcast channel transmission protocol is the 5G NR protocol, and the start address and data length are pre-acquired according to the 5G NR protocol.

In one example, a start address of an SSB may be acquired through computation according to a synchronization time difference between the user equipment, to which the cell search method is applied, and the sender of the downlink data, and time domain positions, separately determined on the basis of the broadcast channel transmission protocol, of the SSB and cell coverage range.

The data length is pre-stored in a local record, which is directly called during cell search procedure. The start address of the SSB may be obtained by computing during cell search, that is

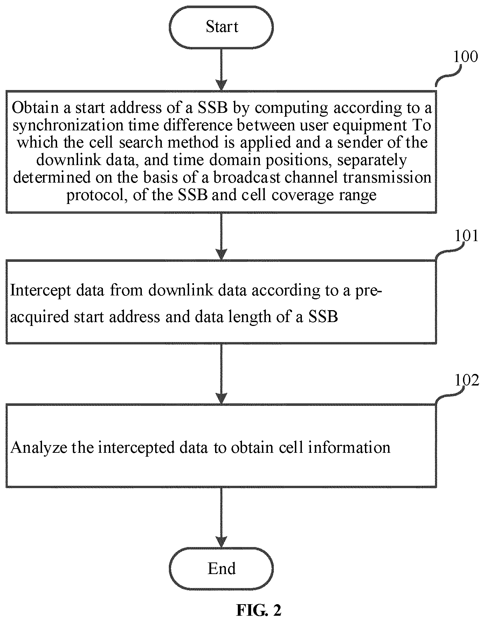

Before the operation 101, a cell search method further includes an operation 100 with a specific flow shown in FIG. 2:
In the operation 100: the start address of the SSB is obtained by computing according to the synchronization time difference between the user equipment to which the cell search method is applied and the sender of the downlink data, and the time domain positions, separately determined on the basis of the broadcast channel transmission protocol, of the SSB and the cell coverage range.

Specifically, the start address of the SSB may be computed according to the following formula: the start address SSBStart = FrameStart + SSBPositionTab - Coverage/n.

Herein, FrameStart is the synchronization time difference between the user equipment to which the cell search method is applied and the sender of the downlink data, SSBPositionTab is the time domain positions of the SSB separately determined on the basis of the broadcast channel transmission protocol, Coverage is the cell coverage range, and n is a positive number. It is worth noting that when this formula is adopted, a length value of Coverage needs to be converted into the number of sampling points.

In an embodiment, the user equipment includes a positioning sensor. Since the user equipment includes a positioning sensor, and the positioning sensor is in a normal state, the user equipment is synchronized with the sender of the downlink data by using the positioning sensor, and the synchronization time difference is zero. That is, when starting a cell search procedure after it is detected that the user equipment is out of sync, the synchronization time difference between the user equipment to which by the cell search method is applied and the sender of the downlink data is zero. Therefore, the pre-stored start address SSBStart = SSBPositionTab - Coverage/n.

The time domain positions SSBPositionTab of the SSB is obtained by computing according to SSB configuration parameters. The SSB configuration parameters are determined on the basis of the broadcast channel protocol. SSBPositionTab corresponding to the SSB configuration parameters may be obtained by pre-computing and pre-storing in the form of a table, and may be directly called in the cell search procedure. For example, in an embodiment, there are six different SSB configuration parameters in the 5G NR protocol, SSBPositionTab corresponding to the six different SSB configuration parameters is pre-stored in the form of a table, and SSBPositionTab corresponding to the SSB configuration parameters is directly called during cell search.

The cell coverage range is preset by obtaining the cell coverage range by computing according to a guard interval between uplink and downlink determined on the basis of the broadcast channel transmission protocol and estimated switch time between uplink and downlink. It is worth noting that the cell coverage range may affect acquisition of the start address and the data length, so the cell coverage range may or may not be a maximum of the cell coverage range.

In an embodiment, a maximum value in the cell coverage range is selected to participate in computation, such that the start address of the SSB obtained by computation may be applied to more application scenes (that is, restriction on a position of the user equipment is less), and applicability is wider. A maximum value of the cell coverage rang Coverage =(GP - T[Rx-Tx,Ue])^{∗}c;

Herein, c is a speed of light, c=3^{∗}10⁸m/s; GP is a guard interval between uplink and downlink, GP is used to guarantee that the user equipment sends the uplink data at the same time in the uplink interval, and T[Rx-Tx,Ue] is estimated switch time between uplink and downlink.

When a value of the cell coverage range is the maximum, n=2, that is, the start address SSBstart = FrameStart + SSBPositionTab - Coverage/2. However, unlimited to this, n may be valued according to specific conditions.

In addition, the data length SSBLength is obtained by computing according to the number of sampling points determined on the basis of the broadcast channel transmission protocol and supported by the user equipment and the cell coverage range determined on the basis of the broadcast channel transmission protocol.

Specifically, based on information such as bandwidth and subcarrier spacing supported by the broadcast channel transmission protocol, the number of sampling points FFTSize supported by the user equipment may be determined, and then the data length may be obtained by computing according to the number of sampling points (FFTSize) and the cell coverage range (Coverage). The data length may be computed according to the following formula: SSBLength = FFTSize + Coverage. When this formula is used, the length value of Coverage needs to be converted into the number of sampling points.

In the operation 102, PSS processing is performed on the intercepted data to acquire a position feature NID2 of a physical cell. On the basis, SSS processing is performed to acquire a position feature NID1 of a physical cell group. According to NID1 and NID2, a cell physical symbol PCI is determined. Finally, a cyclic redundancy check (CRC) result is acquired by analyzing the PBCH signal, and the whole fast cell search procedure is completed.

In the related art, it is necessary to try to analyze all possible time domain positions of the primary synchronization signal (contained in the SSB) and all possible frequency domain positions of the secondary synchronization signal (contained in the SSB) in the downlink data, which requires too long time and affects user experience. Compared with the related art, in embodiments provided by the present disclosure, a position of the SSB is pre-determined, and only a data section containing the SSB needs to be intercepted from the downlink data and analyzed, thus greatly reducing amount of data to be processed, shortening the cell search time and improving the user experience.

A second embodiment of the present disclosure relates to a cell search method. This embodiment is roughly the same as the first embodiment, except that in this embodiment, before obtaining the start address of the SSB by computing according to a synchronization time difference between user equipment to which the cell search method is applied and a sender of the downlink data, and time domain positions, separately determined on the basis of the broadcast channel transmission protocol, of the SSB and cell coverage range, the cell search method further includes: acquiring a locally recorded synchronization time difference between the user equipment before being out of sync and the sender of the downlink data when starting cell search after it is detected that the user equipment is out of sync.

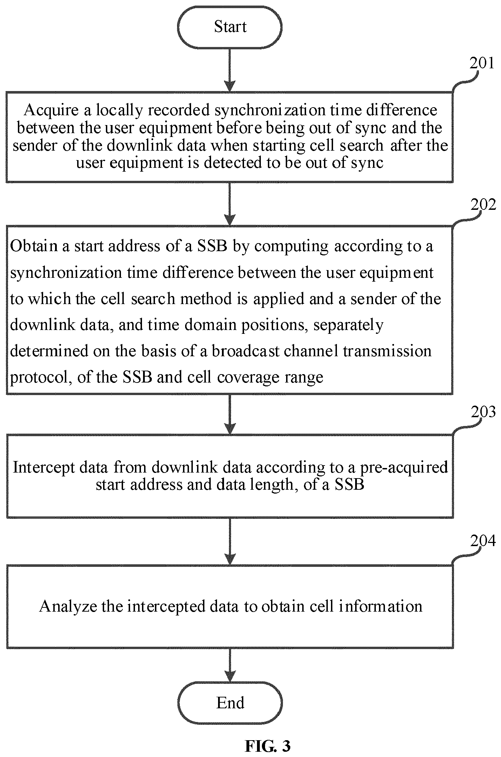

A flowchart of the cell search method in this embodiment is shown in FIG. 3.

In an operation 201, the locally recorded synchronization time difference between the user equipment before being out of sync and the sender of the downlink data is acquired when starting cell search after the user equipment is detected to be out of sync.

Specifically, a user equipment being out of sync refers to loss of connection between the user equipment and a cell. However, before the user equipment is out of sync, that is, when the user equipment accesses the cell, the synchronization time difference FrameStart between the user equipment and the sender of the downlink data may be recorded in real time. Since change of the synchronization time difference FrameStart between the user equipment before and after being out of sync and the sender of the downlink data is extremely small, when the user equipment starts cell search, the locally recorded synchronization time difference FrameStart between the user equipment before being out of sync and the sender of the downlink data is acquired. In this way, the start address of the SSB may be accurately and quickly determined, such that the position of the SSB in the downlink data may be accurately and quickly determined.

It is worth noting that whether the user equipment includes a positioning sensor, the locally recorded synchronization time difference between the user equipment before being out of sync and the sender of the downlink data is acquired when starting cell search after the user equipment is detected to be out of sync.

In an operation 202, the start address of the SSB is obtained by computing according to the synchronization time difference between the user equipment to which the cell search method is applied and the sender of the downlink data, and the time domain positions, separately determined on the basis of the broadcast channel transmission protocol, of the SSB and the cell coverage range.

The operation 202 is similar to the operation 100, and is no more repeated herein. It is worth noting that in this embodiment, the synchronization time difference between the user equipment to which the cell search method is applied and the sender of the downlink data is the locally recorded synchronization time difference between the user equipment being out of sync and the sender of the downlink data.

In an operation 203: data are intercepted from the downlink data according to the pre-acquired start address and data length of the SSB.

In an operation Step 204: the intercepted data are analyzed to acquire cell information.

The operations 203 and 204 are similar to the operations 101 and 102 respectively and are no more repeated herein.

In this embodiment, the locally recorded synchronization time difference between the user equipment before being out of sync and the sender of the downlink data when starting cell search after the user equipment is detected to be out of sync, and a specific manner for the user equipment, after being out of sync, to quickly start cell search is provided.

A third embodiment of the present disclosure relates to a cell search method. This embodiment is roughly the same as the first embodiment, except that in this embodiment, before obtaining the start address of the SSB by computing according to a synchronization time difference between user equipment to which the cell search method is applied and a sender of the downlink data, and time domain positions, separately determined on the basis of the broadcast channel transmission protocol, of the SSB and cell coverage range, the cell search method further includes: when starting cell search after the user equipment is detected to be powered on and on the condition that the user equipment includes a positioning sensor, the user equipment is synchronized with the sender of the downlink data by using the positioning sensor and the synchronization time difference is set to zero.

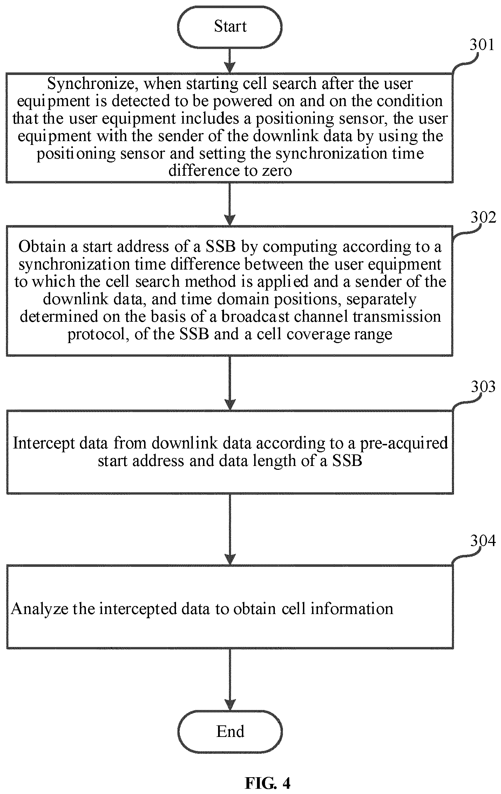

A flowchart of the cell search method in this embodiment is shown in FIG. 4.

In an operation 301: when starting cell search after the user equipment is detected to be powered on and on the condition that the user equipment includes the positioning sensor, the user equipment is synchronized with the sender of the downlink data by using the positioning sensor and the synchronization time difference is set to zero.

Specifically, the user equipment being powered-on includes first powered-on (that is, a new machine just leaving a factory) and non-first powered-on (that is, restart after shutdown), and the positioning sensor may be GPS, etc.

In a specific example, when the user equipment is not powered on for the first time, when the user equipment starts cell search after the user equipment is powered on, since the user equipment includes the positioning sensor, the positioning sensor may be utilized for synchronizing time, and in this case, the synchronization time difference between the user equipment and the sender of the downlink data is zero, that is, the synchronization time difference is not worth consideration.

It should be noted that when the user equipment is not powered on for the first time, if the user equipment does not include the positioning sensor, when the user equipment starts cell search after the user equipment is powered on, since the synchronization time difference is saved in a local record of the user equipment, cell search may be performed in the way in the second embodiment. However, it is uncertain whether the user equipment after being powered on again is in an original position, so there is a possibility that the cell search is failed. In this case, the user equipment may perform cell search procedure by using a cell search method in the related art.

In a specific example, when the user equipment is powered on for the first time, when the user equipment starts cell search after the user equipment is powered on, since the user equipment includes the positioning sensor, the positioning sensor may be utilized for synchronizing time, and in this case, the synchronization time difference between the user equipment and the sender of the downlink data is zero, that is, the synchronization time difference is not worth consideration.

It should be noted that when the user equipment is powered on for the first time, if the user equipment does not include the positioning sensor, the user equipment may only perform cell search procedure by using the cell search method in the related art.

In an operation 302, the start address of the SSB is obtained by computing according to the synchronization time difference between the user equipment to which the cell search method is applied and the sender of the downlink data, and the time domain positions, separately determined on the basis of the broadcast channel transmission protocol, of the SSB and the cell coverage range.

The operation 302 is similar to the operation 100, and is no more repeated herein. It is worth noting that in this embodiment, the synchronization time difference between the user equipment to which the cell search method is applied and the sender of the downlink data is zero.

In an operation 303, data are intercepted from the downlink data according to the pre-acquired start address and data length of the SSB.

In an operation 304: the intercepted data are analyzed to acquire cell information.

The operations 303 and 304 are similar to the operations 101 and 102 respectively and are no more repeated herein.

In this embodiment, when starting cell search after the user equipment is detected to be powered on and on the condition that the user equipment includes the positioning sensor, the user equipment is synchronized with the sender of the downlink data by using the positioning sensor and the synchronization time difference is set to zero. A specific manner for the user equipment to quickly start cell search after being powered on is provided.

The operation division of the method above is merely for the sake of description clearness, and the operations may be combined into one operation or some operations may be split into multiple operations, as long as the same logical relationship is included, all of which are within the protection scope of this disclosure. Adding insignificant modification or introducing insignificant design to the algorithm or flow, without changing core design thereof shall fall within the protection scope of this disclosure.

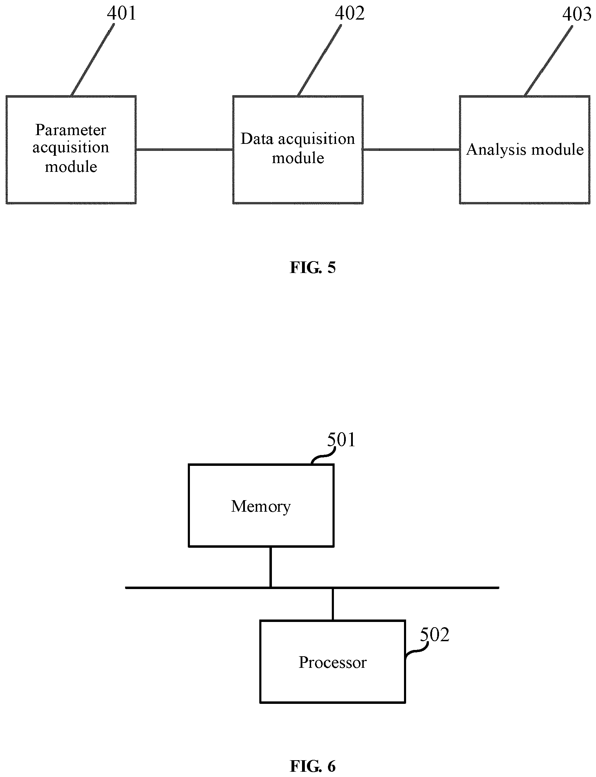

A fourth embodiment of the present disclosure relates to a cell search apparatus. As shown in FIG. 5, the apparatus includes:

a parameter acquisition module 401 configured to pre-acquire a start address and a data length of a SSB according to a broadcast channel transmission protocol based on which downlink data are transmitted;

a data acquisition module 402 configured to intercept data from the downlink data, transmitted on the basis of the broadcast channel transmission protocol, according to the pre-acquired start address and the data length of the SSB; and
an analysis module 403 configured to analyze the intercepted data to acquire cell information.

In a specific example, the cell search apparatus further includes a cell coverage acquisition module configured to obtain cell coverage range by computing according to a guard interval between uplink and downlink determined on the basis of the broadcast channel transmission protocol and estimated switch time between uplink and downlink.

In a specific example, the cell search apparatus further includes a synchronization time difference acquisition module configured to, before intercepting the data from the downlink data according to the pre-acquired start address and data length of the SSB, acquire a locally recorded synchronization time difference between the user equipment before being out of sync and a sender of the downlink data when starting cell search after the user equipment is detected to be out of sync.

In a specific example, the synchronization time difference acquisition module is configured to, before intercepting the data from the downlink data according to the pre-acquired start address and data length of the SSB, when starting cell search after the user equipment is detected to be powered on and on the condition that the user equipment includes a positioning sensor, synchronize the user equipment with the sender of the downlink data by using the positioning sensor and setting the synchronization time difference to zero.

In a specific example, the parameter acquisition module 401 is configured to obtain the start address of the SSB by computing according to the synchronization time difference between the user equipment to which the cell search method is applied and the sender of the downlink data, and the time domain positions, separately determined on the basis of the broadcast channel transmission protocol, of the SSB and the cell coverage range; and obtain the data length by computing, according to the number of sampling points determined on the basis of the broadcast channel transmission protocol and supported by the user equipment and the cell coverage range determined on the basis of the broadcast channel transmission protocol.

In a specific example, the parameter acquiring module 401 is configured to obtain the start address of the SSB by computing according to the synchronization time difference, the time domain positions and a maximum value in the cell coverage range, and to obtain the data length by computing according to the number of sampling points determined on the basis of the broadcast channel transmission protocol and supported by the user equipment and the cell coverage range determined on the basis of the broadcast channel transmission protocol.

It is not difficult to find that this embodiment is a user equipment embodiment corresponding to the first embodiment, the second embodiment and the third embodiment, and this embodiment may be implemented in cooperation with the first embodiment, the second embodiment and the third embodiment. The related technical details mentioned in the first embodiment, the second embodiment and the third embodiment are still valid in this embodiment, and are no more repeated herein in order to reduce repetition. Accordingly, the related technical details mentioned in this embodiment may also be applied to the first embodiment, the second embodiment and the third embodiment.

It is worth mentioning that all the modules involved in this embodiment are logic modules. In a practical application, a logic unit may be a physical unit, a portion of the physical unit or a combination of multiple physical units. In addition, in order to highlight an innovative portion of the present disclosure, units that are not closely related to solving of the technical problems proposed by the present disclosure are not introduced in this embodiment, which does not mean that there are no other units in this embodiment.

A fifth embodiment of the present disclosure relates to a user equipment, as shown in FIG. 6. The user equipment includes at least one processor 502; and a memory 501 in communication connection with the at least one processor. The memory 501 is configured to store an instruction executable by the at least one processor 502, and the instruction, when executed by the at least one processor 502, causes the at least one processor 502 to carry out the embodiments of the cell search method described above.

The memory 501 and the at least one processor 502 are connected through a bus, and the bus may include interconnected buses and bridges unlimited in the number, and the bus connects various circuits of one or more processors 502 and the memory 501 together. The bus may further connect various other circuits such as peripheral devices, voltage regulators, and power management circuits, which are well known in the art, and therefore are not further described herein. A bus interface provides an interface between the bus and a transceiver. The transceiver may be one or more components, such as a plurality of receivers and senders, providing a unit for being in communication with various other apparatuses on a transmission medium. Data processed by the at least one processor 502 are transmitted on a wireless medium through an antenna. Further, the antenna also receives the data and transmits the data to the at least one processor 502.

The at least one processor 502 is responsible for managing the bus and general processing, and may also provide various functions, including timing, peripheral interfaces, voltage regulation, power management and other control functions. The memory 501 may be used for storing data used by the at least one processor 502 during operations.

A sixth embodiment of the present disclosure relates to a computer-readable storage medium storing a computer program, and the computer program, when executed by a processor implements the above method embodiments.

That is, it may be understood by those having ordinary skill in the art that all or a portion of the operations for implementing the method in the above embodiments may be completed by instructing related hardware through the program, which is stored in the storage medium and includes several instructions to make a device (which may be a single chip microcomputer, a chip, etc.) or a processor perform all or a portion of the operations of the methods described in the embodiments of the present disclosure. The foregoing storage medium includes a USB flash drive, a mobile hard disk drive, a read-only memory (ROM), a random access memory (RAM), a diskette or an optical disk, etc., which may store program codes.

It may be understood by those having ordinary skill in the art that the above embodiments are specific embodiments to implement the present disclosure, and in a practical application, various changes can be made to the form and details without departing from the spirit and scope of the present disclosure.

## Claims

1. A cell search method, comprising:
intercepting data from downlink data according to a pre-acquired start address and data length of a synchronization signal and physical broadcast channel block, SSB, wherein the start address and the data length are pre-acquired according to a broadcast channel transmission protocol based on which the downlink data are transmitted; and
analyzing the intercepted data to obtain cell information.

2. The cell search method according to claim 1, wherein the start address of the SSB is pre-acquired by:
obtaining the start address of the SSB by computing according to a synchronization time difference between a user equipment, to which the cell search method is applied, and a sender of the downlink data, time domain positions, separately determined on the basis of the broadcast channel transmission protocol, of the SSB, and cell coverage range.

3. The cell search method according to claim 2, wherein the method further comprises:
before intercepting the data from the downlink data according to the pre-acquired start address and data length of the SSB,
in response to starting cell search after the user equipment is detected to be out of sync,
acquiring a locally recorded synchronization time difference between the user equipment before being out of sync and the sender of the downlink data.

4. The cell search method according to claim 2, wherein the method further comprises:
before intercepting the data from the downlink data according to the pre-acquired start address and data length of the SSB,
synchronizing, in response to starting cell search after the user equipment is detected to be powered on and the user equipment including a positioning sensor, the user equipment with the sender of the downlink data by using the positioning sensor and
setting the synchronization time difference to zero.

5. The cell search method according to claim 2, wherein obtaining the start address of the SSB by computing according to the synchronization time difference between the user equipment to which the cell search method is applied and the sender of the downlink data, and the time domain positions, separately determined on the basis of the broadcast channel transmission protocol, of the SSB and the cell coverage range comprises:
obtaining the start address of the SSB by computing according to the synchronization time difference, the time domain positions and a maximum value in the cell coverage range.

6. The cell search method according to claim 2, wherein the cell coverage range is preset by: obtaining the cell coverage range by computing according to a guard interval between uplink and downlink determined on the basis of the broadcast channel transmission protocol and estimated switch time between uplink and downlink.

7. The cell search method according to any one of claims 1-6, wherein the data length is pre-acquired by: obtaining the data length by computing according to the number of sampling points determined on the basis of the broadcast channel transmission protocol and supported by the user equipment and the cell coverage range determined on the basis of the broadcast channel transmission protocol.

8. A cell search apparatus, comprising:
a data acquisition module, configured to intercept, according to a pre-acquired start address and data length of a synchronization signal and physical broadcast channel block, SSB, data from downlink data transmitted on the basis of a broadcast channel transmission protocol;
an analysis module, configured to analyze the intercepted data to obtain cell information; and
a parameter acquisition module, configured to pre-acquire the start address and the data length of the SSB according to the broadcast channel transmission protocol based on which the downlink data are transmitted.

9. A user equipment, comprising:
at least one processor; and
a memory in communication connection with the at least one processor, wherein
the memory is configured to store an instruction executable by the at least one processor, and the instruction, when executed by the at least one processor, causes the at least one processor to carry out the cell search method according to any one of claims 1-7.

10. A computer-readable storage medium, storing a computer program, wherein the computer program, when executed by a processor, implements the cell search method according to any one of claims 1-7.
